Europäisches Patentamt

European Patent Office

Office européen des brevets

(11) Veröffentlichungsnummer: **0 334 995**
**A2**

## (12) EUROPÄISCHE PATENTANMELDUNG

(21) Anmeldenummer: **88116820.7**

(22) Anmeldetag: **11.10.88**

(51) Int. Cl.⁴: **F16L 41/00**

(30) Priorität: **29.03.88 DE 3810605**

(43) Veröffentlichungstag der Anmeldung:
**04.10.89 Patentblatt 89/40**

(84) Benannte Vertragsstaaten:
**AT BE CH DE FR GB IT LI NL SE**

(71) Anmelder: **Firma Carl Freudenberg**
**Höhnerweg 2-4**
**D-6940 Weinheim/Bergstrasse(DE)**

(72) Erfinder: **Friedrichs, Christian**
**Flattichstrasse 21**
**D-7140 Ludwigsburg 6(DE)**

(74) Vertreter: **Weissenfeld-Richters, Helga, Dr.**
**Höhnerweg 2**
**D-6940 Weinheim/Bergstrasse(DE)**

(54) **Strömungsleitende Verbindung.**

(57) Eine strömungsleitende Verbindung für zwei Rohre, umfassend einen Hohlkörper mit einer Durchflußöffnung, der dem einen Rohr fest und dem anderen Rohr (2) relativ beweglich zugeordnet ist. Der Hohlkörper (1) ist durch einen Längsschlitz (3) in das relativ bewegliche Rohr (2) eingreifend mit einem darin angeordneten Kolben (4) fest verbunden, wobei eine sich quer zur Richtung des Kolbens erstreckende Leitung (7) die Durchflußöffnung (6) mit einem Längsdurchlaß (5) des Kolbens (4) verbindet. Der Längsschlitz des relativ beweglichen Rohres (2) ist bis in den Bereich des Kolbens (4) durch ein flexibles Dichtband (8) abgedeckt, welches in einer Querausnehmung (9) des Kolbens (4) radial unterhalb der Leitung (7) an dieser vorbeigeführt ist.

Fig. 1

Schnitt A - B

EP 0 334 995 A2

## Strömungsleitende Verbindung

Die Erfindung betrifft eine strömungsleitende Verbindung nach dem Oberbegriff von Anspruch 1.

Eine solche Verbindung ist bekannt. Sie dient der Überleitung eines vorgespannten, strömungsfähigen Mediums aus einem ersten, ruhend gelagerten Rohr in ein zweites, relativ bewegliches Rohr. Der dabei zur Anwendung gelangende Hohlkörper besteht zumeist aus einem flexiblen Schlauch, dessen beiderseitige Enden an den Rohren festgelegt sind. Relativverlagerungen des relativ beweglichen Rohres haben indessen ein Nachschleppen des Schlauches zur Folge, was aus allgemeinen Platzgründen sowie aus Gründen der Übersichtlichkeit der Anordnung wenig befriedigend ist.

Der Erfindung liegt die Aufgabe zugrunde, eine solche Verbindung derart weiterzuentwickeln, daß sich die Verwendung eines nachgeschleppten Schlauches erübrigt.

Diese Aufgabe wird erfindungsgemäß bei einer strömungsleitenden Verbindung der eingangs genannten Art mit den kennzeichnenden Merkmalen von Anspruch 1 gelöst. Auf vorteilhafte Ausgestaltungen nehmen die Unteransprüche Bezug.

Die erfindungsgemäße Verbindung ist dadurch gekennzeichnet, daß der Hohlkörper durch einen Längsschlitz in das relativ bewegliche Rohr eingreift und mit einem darin angeordneten Kolben fest verbunden ist, daß der Kolben von einem sich parallel zu seiner Achse erstreckenden Längsdurchlaß durchdrungen ist, daß der Längsdurchlaß und die Durchflußöffnung durch eine sich quer zu dem Kolben erstreckende Leitung verbunden sind, daß der Längsschlitz innenseitig bis in den Bereich der beiden stirnseitigen Enden des Kolbens durch ein flexibles Dichtband abgedeckt ist und daß das Dichtband in einer Querausnehmung des Kolbens radial unterhalb der Leitung an dieser vorbeigeführt ist. Der Kolben bildet insofern nichts anderes als einen in Längsrichtung durchströmbaren Abzweig, der in dem relativ beweglichen Rohr parallel zu dessen Erstreckung verschiebbar ist. Das in dem relativ beweglichen Rohr enthaltene, strömungsfähige und vorgespannte, fließfähige Medium kann dadurch seitlich abgezweigt und durch die Durchflußöffnung in das relativ unbewegliche Rohr und damit das zu versorgende Aggregat überführt werden. Nachzuschleppende Schlauchverbindungen sind dadurch unabhängig von der relativen gegenseitigen Zuordnung der beiden zu verbindenden Rohre absolut entbehrlich.

Das relativ zu dem Kolben bewegliche Rohr kann zusätzlich der Führung des zu versorgenden Aggregates dienen. In Fällen, in denen es sich hierbei um einen sogenannten Industrieroboter handelt, ist das häufig von einem entscheidenden Vorteil.

Der Längsschlitz kann ein Profil von in radialer Richtung nach außen verminderter Breite haben, wobei es sich als vorteilhaft erwiesen hat, wenn das Profil in radialer Richtung nach außen eine abgestuft verminderte Breite hat. Das axial außerhalb der jeweiligen Position des Kolbens in den Längsschlitz, ausgehend von innen, eingefügte Dichtband erhält dadurch einen festen Sitz, der nicht nur eine gute Abdichtung gegenüber dem Rohr gewährleistet, sondern auch eine schwingungsstabile, räumlich fixierte Zuordnung zu demselben.

Bei einer Axialverschiebung des Kolbens in dem umschließenden Rohr wird das Dichtband im Bereich des einen Endes des Kolbens von dem Längsschlitz abgehoben, um die der Überführung des Strömungsmittels dienende Leitung herumgeführt und im Bereich des anderen Endes des Kolbens aufs neue in den Längsschlitz eingefügt. Um hierbei einen Verlust von Strömungsmittel zu vermeiden, hat es sich als vorteilhaft bewährt, wenn das Profil des Dichtbandes derart an das Profil des Längsschlitzes angepaßt ist, daß beide auf der Innenseite oberflächeneben ineinander übergehen. Zusätzlich kann der Kolben im Bereich seiner beiderseitigen Enden mit üblichen Kolbendichtungen versehen sein, beispielsweise in der Gestalt von Nutringen.

Des weiteren hat es sich als vorteilhaft erwiesen, wenn zwischen den jeweiligen Nutringen und den stirnseitigen Enden des Kolbens Führungsringe vorgesehen sind. Diese gewährleisten nicht nur eine bessere Leichtgängigkeit des Kolbens, sondern darüber hinaus eine definierte Zuordnung des Dichtbandes zu dem aufnehmenden Längsschlitz nach vorausgegangener Relativverschiebung des Kolbens.

Das Dichtband kann aus einem in Querrichtung biegesteif armierten Gummiband bestehen, beispielsweise aus einem Gummiband, welches im Inneren durch ein kontinuierlich durchgehendes Stahlband armiert ist. Neben einer guten Flexibilität und Beugbarkeit in Längsrichtung weist ein solches Gummiband eine gute mechanische Widerstandsfähigkeit in bezug auf Querdeformationen auf.

Das Dichtband kann innerhalb der Querausnehmung des Kolbens durch Rollen geführt sein, was die Leichtgängigkeit des Kolbens bei Relativverschiebungen verbessert. Des weiteren hat es sich als vorteilhaft bewährt, wenn das in bezug auf den Kolben relativ bewegliche Rohr von rechteckigem Profil ist. Der Kolben erhält hierdurch eine präzise Führung auch in Umfangsrichtung, was eine Querbelastung des Längsschlitzes durch den den Längsschlitz in Querrichtung durchgreifenden Hohlkörper weitestgehend ausschließt.

Der Gegenstand der vorliegenden Erfindung wird nachfolgend anhand der in der Anlage beigefügten Zeichnung weiter erläutert. Es zeigen:

Figur 1 eine strömungsleitende Verbindung in längsgeschnittener Darstellung.

Figur 2 den Kolben der strömungsleitenden Verbindung nach Figur 1 in einer Ansicht von vorn.

Figur 3 den Kolben gemäß Figur 2 in einer quergeschnittenen Darstellung.

Figur 4 einen Ausschnitt aus dem relativ beweglichen Rohr in quergeschnittener Darstellung.

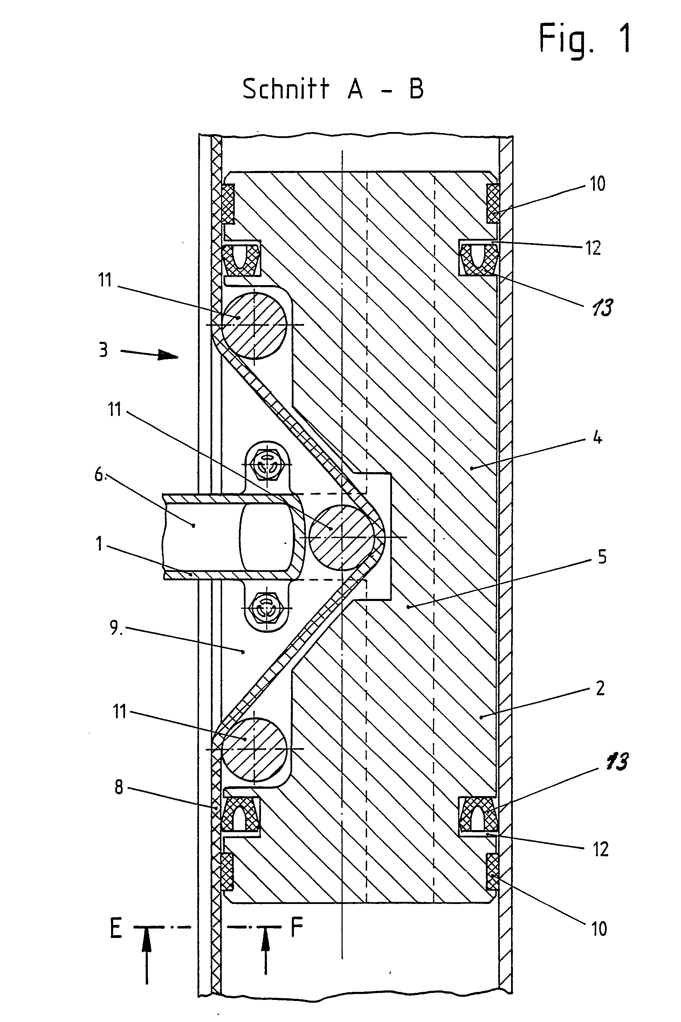

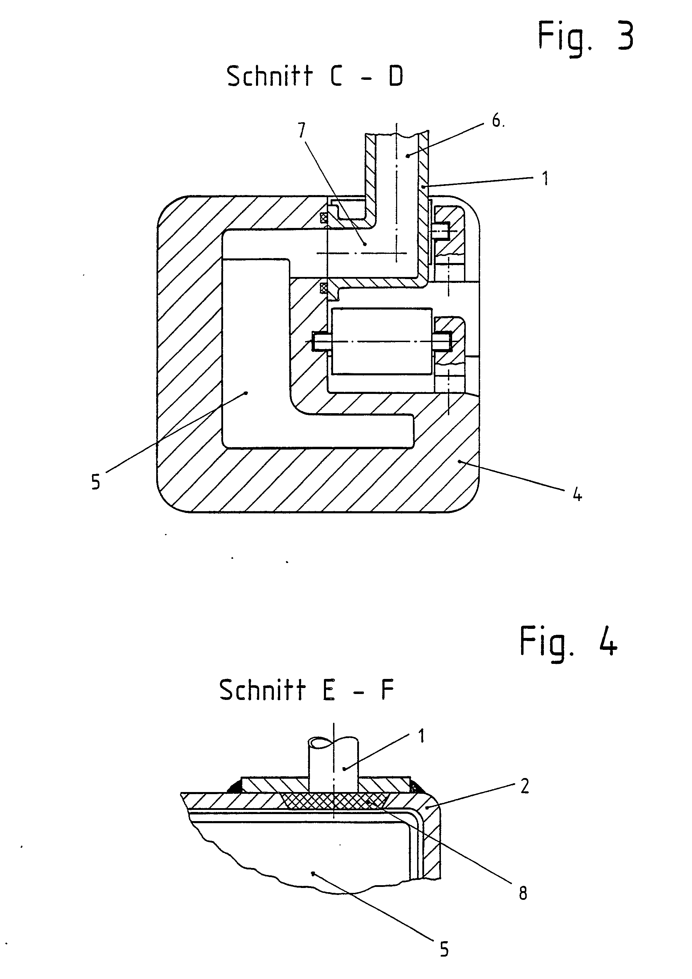

Bei der strömungsleitenden Verbindung nach Figur 1 sind das relativ bewegliche Rohr 2 und der Kolben 4 längsgeschnitten dargestellt. Die Querausnehmung 9 des Kolbens 4 ist hierdurch sichtbar und damit zugleich die Anbringungsart des an dem Kolben unverrückbar festgelegten Hohlkörpers 1, durch welchen das fließfähige, unter erhöhtem Druck stehende Medium aus der Rohrleitung 2 in die Durchflußöffnung 6 überführt wird. Die Einzelheiten hinsichtlich der Überführungsart sind am besten in Figur 3 erkennbar. Es ist zu ersehen, daß der Hohlkörper 1 durch die Leitung 7 mit dem Längsdurchlaß 5 des Kolbens 4 verbunden ist. Der Kolben 4 ist dadurch in Längsrichtung ganz durchströmbar, wobei sich zugleich ein Abzweig über die Leitung 7 in Richtung der Durchflußöffnung 6 ergibt.

Des weiteren enthält der Kolben 4 in seiner Querausnehmung 9 Rollen 11, durch welche bei einer Axialverschiebung des Kolbens 4 in dem Rohr 2 im Bereich des einen Endes das flexible Dichtband 8 von dem Längsschlitz 3 abgehoben, um den Hohlkörper 1 herumgeführt und im Bereich des anderen Endes des Kolbens aufs Neue in den Längsschlitz 3 eingefügt wird. Die Rollen 11 sind leicht verdrehbar in dem Kolben 4 gelagert. Sie setzen einer Relativverschiebung des Kolbens 4 daher keinen nennenswerten Widerstand entgegen.

Das flexible Dichtband 8 besteht aus einem stahlarmierten Gummistreifen. Dieser ist hinsichtlich seines Profils so gestaltet, daß sich nach dem Einfügen in den Längsschlitz 3 eine kontinuierlich durchgehende Innenwandbegrenzung des Rohres 2 auch im Bereich des Längsschlitzes ergibt. Die Abdichtung der Querausnehmung 9 des Kolbens 4 gegenüber dem Innenraum des Rohres 2 wird dadurch vereinfacht.

Sie bedarf lediglich des Einfügens zweier üblicher Nutringe 13 in die dafür vorgesehenen Nuten 12 des Kolbens.

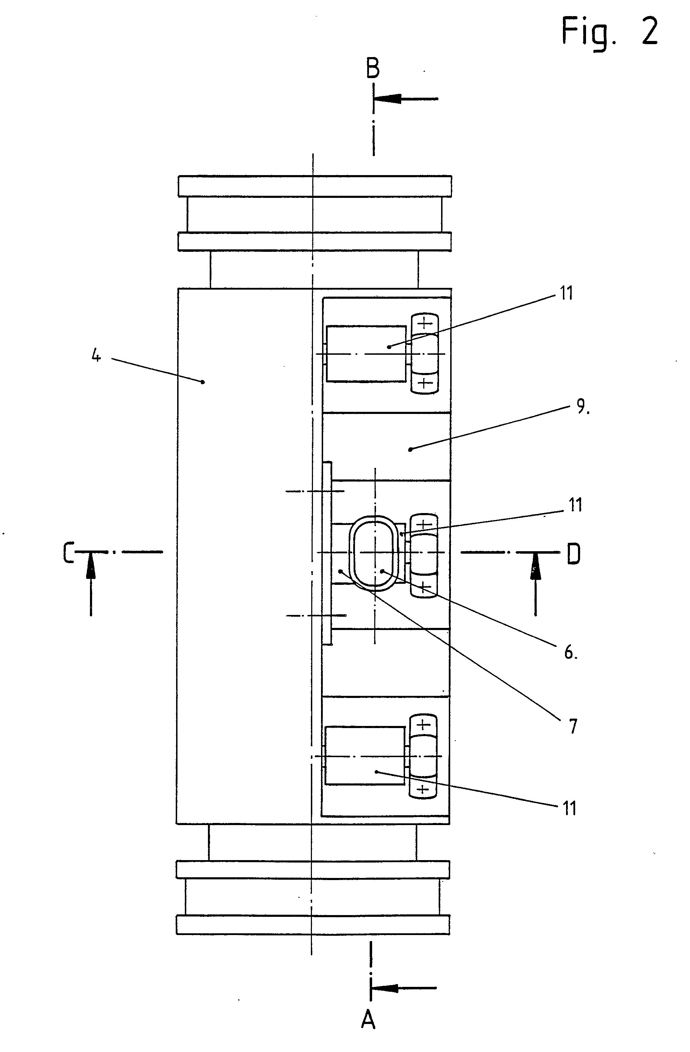

Zusätzlich sind zwischen den jeweiligen Nutringen 13 und den stirnseitigen Enden des Kolbens 4 Führungsringe 10 vorgesehen. Diese sind ebenfalls in ihrem Profil angepaßten Nuten des Kolbens gelagert. Sie bestehen aus einem Werkstoff besonders geringen Reibungswiderstandes, beispielsweise aus Polyamid. Neben einer guten Relativverschiebbarkeit des Kolbens 4 wird hierdurch eine gute Führung des Dichtbandes 8 erreicht, wenn dieses im Anschluß an eine Relativverschiebung des Kolbens 4 aufs Neue in den Längsschlitz 3 eingefügt worden ist. In Figur 2 ist der vorstehend beschriebene Kolben in der Draufsicht wiedergegeben. Es ist vor allem die gegenseitige Zuordnung der Querausnehmung 9 zu den Rollen 11 und zu der Durchflußöffnung 6 sowie der Leitung 7 erkennbar. Des weiteren sind die Lagerungen der Rollen 11 angedeutet.

Figur 4 zeigt einen Ausschnitt durch die Wandung des relativ beweglichen Rohres im Bereich des Längsschlitzes, wobei in den Längsschlitz das flexible Dichtband 8 eingefügt und im Hintergrund der Hohlkörper 1 erkennbar ist. Es ist zu ersehen, daß das Dichtband 8 in dem Profil des Längsschlitzes durch eine schwalbenschwanzähnliche Gestaltung seines Profiles formschlüssig gehalten wird und dadurch sogar unabhängig von dem im Inneren des Rohres 2 herrschenden Druck seine Lage nicht ohne weiteres zu verändern vermag. Hierzu bedarf es vielmehr der Axialverschiebung des Kolbens 5, welche vorstehend beschrieben worden ist.

## Ansprüche

1. Strömungsleitende Verbindung für zwei Rohre, umfassend einen Hohlkörper mit einer Durchflußöffnung, der dem einen Rohr fest und dem anderen Rohr relativ beweglich zugeordnet ist, dadurch gekennzeichnet, daß der Hohlkörper (1) durch einen Längsschlitz (3) in das relativ bewegliche Rohr (2) eingreifend mit einem darin angeordneten Kolben (4) fest verbunden ist, daß der Kolben (4) von einem sich parallel zu seiner Achse erstreckenden Längsdurchlaß (5) durchdrungen ist, daß der Längsdurchlaß (5) und die Durchflußöffnung (6) durch eine sich quer zu dem Kolben (4) erstreckende Leitung (7) verbunden sind, daß der Längsschlitz (3) innenseitig bis in den Bereich der beiden stirnseitigen Enden des Kolbens (4) durch ein flexibles Dichtband (8) abgedeckt ist und daß das Dichtband (8) in einer Querausnehmung (9)des Kolbens (4) radial unterhalb der Leitung (7) an dieser vorbeigeführt ist.

2. Verbindung nach Anspruch 1, dadurch gekennzeichnet, daß der Längsschlitz (3) ein Profil mit einer in radialer Richtung nach außen verminderten Breite hat.

3. Verbindung nach Anspruch 2, dadurch gekennzeichnet, daß die Breite des Profils in radialer Richtung nach außen abgestuft vermindert ist.

4. Verbindung nach Anspruch 1 bis 3, dadurch gekennzeichnet, daß das Dichtband (8) oberflächenbündig von innen in den Längsschlitz (3) einfügbar ist.

5. Verbindung nach Anspruch 1 bis 4, dadurch gekennzeichnet, daß der Kolben (4) im Bereich der stirnseitigen Enden gegenüber der Innenwandung des relativ beweglichen Rohres (2) und der Innenseite des Dichtbandes (8) beweglich abgedichtet ist.

6. Verbindung nach Anspruch 1 bis 5, dadurch gekennzeichnet, daß für die Abdichtung Nutringe (13) vorgesehen sind.

7. Verbindung nach Anspruch 6, dadurch gekennzeichnet, daß zwischen den Nutringen (13) und den stirnseitigen Enden des Kolbens (4) Führungsringe (10) vorgesehen sind.

8. Verbindung nach Anspruch 1 bis 7, dadurch gekennzeichnet, daß das Dichtband (8) aus einem in Richtung seiner Breite biegesteif armierten Gummiband besteht.

9. Verbindung nach Anspruch 1 bis 8, dadurch gekennzeichnet, daß das Dichtband (8) innerhalb der Querausnehmung des Kolbens (4) durch Rollen (11) geführt ist.

10. Verbindung nach Anspruch 1 bis 9, dadurch gekennzeichnet, daß das relativ bewegliche Rohr (2) von rechteckigem Profil ist.

EP 0 334 995 A2

Fig. 1

Schnitt A - B

Fig. 2

Fig. 3

Schnitt C - D

Fig. 4

Schnitt E - F